# EUROPÄISCHE PATENTANMELDUNG

(11) **EP 0 953 790 A2**
(43) Veröffentlichungstag der Anmeldung: **03.11.1999**
(21) Anmeldenummer: 99106009.6
(22) Anmeldetag: 25.03.1999
(51) Int. Cl.: F16H 59/10, F16H 61/22

(54) **Wähleinrichtung für ein automatisches Kraftfahrzeuggetriebe**

(30) Priorität: 28.04.1998 DE 19818866
(71) Anmelder: DaimlerChrysler AG, 70567 Stuttgart (DE)
(72) Erfinder: Gösele, Hartmut, 75387 Neubulach (DE); Wörner, Günter, 71394 Kernen (DE)

(57) **Zusammenfassung**

Wähleinrichtung für ein automatisches Kraftfahrzeuggetriebe.Ein erster Sperrkörper (8) ist um eine Drehachse (Z) schwenkbar gelagert, welche zur Richtung einer zu sperrenden Bewegung eines Wählhebels (2) parallel angeordnet ist. Der Sperrkörper (8) hat mindestens eine schräg zum Bewegungsweg des Wählhebels angeordnete Sperrfläche zum Sperren des Wählhebel, wenn der Sperrkörper von einem zweiten Sperrkörper (28) gesperrt ist. Im nicht gesperrten Zustand kann der Wählhebel (2) den ersten Sperrkörper (8) an der schrägen Sperrfläche um die Drehachse (Z) aus dem Bewegungsweg des Wählhebels heraus wegdrücken.

## Beschreibung

Die Erfindung betrifft eine Wähleinrichtung für ein automatisches Kraftfahrzeuggetriebe gemäß dem Oberbegriff von Anspruch 1.

Eine Wähleinrichtung dieser Art ist aus der DE 41 20 379 A1 bekannt. Bei ihr ist eine Drehachse eines ersten Sperrelements parallel zu einer Drehachse eines Wählhebels angeordnet und die Sperrflächen des Sperrelements zeigen in Richtung parallel zur Wählhebellängsrichtung. Dadurch liegt jeder Punkt der Sperrflächen auf einer anderen Hebelarmlänge von der Drehachse des Sperrlelementes entfernt.

Die Erfindung betrifft alle Arten von autonatischen Getrieben, insbesondere Automatikgetriebe mit Drehmomentwandler, vollautomatische und teilautomatische Schaltgetriebe, Wandler-Stufenautomaten und variable Transmissionen (variable transmissions) mit stufenlos veränderbaren Übersetzungsverhältnissen mit oder ohne Zahnräder.

Weitere Wähleinrichtungen sind aus den US 4 721 004, 5 649 452 und 5 695 029 bekannt. Aus der DE 196 41 706 C1 ist eine Wähleinrichtung mit einem schwenkbar gelagerten Wählhebel bekannt, welcher in Richtung von einer Parkposition P über eine Rückwärtsfahrposition R in eine Neutralposition (Leerlaufposition) N, in welcher die Drehmomentübertragung des Fahrzeuggetriebes unterbrochen ist, und in mindestens eine Vorwärtsfahrposition D schwenkbar ist. Für die Positionen P und N sind in Abhängigkeit von bestimmten Betriebsbedingungen wirkende Sperren vorgesehen. In der Parkposition P ist ein Sperren des Wählhebels gefordert, solange die Fahrzeugbremse nicht betätigt ist und der Zündschlüssel nicht im Zündschloss steckt (oder die Zündung nicht eingeschaltet ist). Sobald der Zündschlüssel im Zündschloss steckt (oder die Zündung eingeschaltet ist) und die Bremse betätigt wird, soll der Wählhebel freigegeben werden. Diese Funktion wird im folgenden P-Sperre genannt. Für das Betätigen des Wählhebels von der Neutralposition N in die Rückwärtsfahrposition R ist ebenfalls eine Sperre vorgesehen, welche so lange aktiv sein soll, wie das Fahrzeug eine bestimmte Gronzgeschwindigkeit noch nicht unterschritten hat. Diese Funktion wird im folgenden R-Sperre genannt. Eine Betätigung des Wählhebels von D nach N soll aber durch diese Sperren nicht behindert werden. Diese Funktionen werden durch den Gegenstand der genannten DE 196 41 706 C1 gut gelöst.

Aus der JP 3-239868 A ist eine Anordnung bekannt, bei welcher Sperrvorrichtungen des Wählhebels, welche der Parkposition P und der Rückwärtsfahrposition R zugeordnet sind, durch Erregung eines Elektromagneten entsperrt werden können. Die Sperrfunktion wird durch Federkraft erzeugt. Somit ist es nicht möglich, bei einem Stromausfall im Gesamtsystem des Fahrzeugs die Wähleinrichtung in die Parkposition P zu bringen. Damit ist es auch nicht möglich, das Fahrzeug gesichert zu parken, weil der Zündschlüssel nur in der P-Stellung des Wählhebels aus dem Zündschloss herausgenommen werden kann. Ferner ist aus der JP 6-117526 A eine Wähleinrichtung bekannt, bei welcher ein Wählhebel mit einer Sperrkulisse bewegungsfest verbunden ist, welche mit Sperrnocken versehen ist. Aus der DE-A-41 18 519 ist eine Wähleinrichtung für ein Automatik-Getriebe mit einem Wählhebel bekannt, welcher durch Verschwenken um eine Schwenkachse in der einen Richtung von einer Neutralposition N in eine Vorwärtsfahrtposition D und über diese hinaus zu einer oder mehreren NiedriggangSchaltpositionen (1,2) und in der entgegengesetzten Richtung zu einer Rückwärtsgangposition R und über diese hinaus zu einer Parkposition P gestellt werden kann. Ein manuelles Rückschalten aus einem höher übersetzten Gang in einen niedriger übersetzten Gang wird automatisch dann gesperrt, wenn durch ein solches Zurückschalten für das Fahrzeug ein kritischer Zustand eintreten würde.

Die Aktuatoren oder Stellglieder, welche die genannten Sperrvorrichtungen in Sperrstellung und in Entsperrstellung bringen, sind vorzugsweise elektromagnetische Stellelemente und Federn, können jedoch auch andere Elemente sein; z.B. hydraulisch oder pneumatisch betätigte Elemente. Die Sperren sollen an dem Wählelement durch die manuelle Bedienkraft eines Fahrers nicht entriegelt werden können, wenn die zur Entriegelung erforderlichen Betriebsbedingungen nicht vorliegen, beispielsweise eine Fahrberechtigung des Fahrers, Zündschlüssel im Zündschloss, Fahrzeugbremse aktiviert, eine Fahrzeug-wegfahrsperre (Break-Lock) nicht entsperrt ist und/oder die Fahrzeuggeschwindigkeit unter oder über eine bestimmten Grenzwert liegt. Andererseits soll ein Stellglied die Sperre auch dann entriegeln können, wenn die entsprechenden Betriebsbedingungen erfüllt sind, jedoch der Fahrer bereits vor Erfüllung dieser Betriebsbedingungen eine manuelle Betätigungskraft auf das Wählelement ausübt. In diesem Falle besteht die Gefahr, daß. die mechanischen Sperrelemente durch die manuelle Betätigungskraft am Wählhebel so stark zusammengepresst werden, daß sie von einem Stellglied nicht mehr auseinander gerissen werden können oder das Stellglied eine Baugröße haben müßte, welche bezüglich des erforderlichen Bauraumes und des Gewichtes oder aber wegen der von ihm entwickelten Betriebswärme nicht akzeptabel ist. Je größer ein elektromagnetisches Stellglied ist, desto stärker ist die von ihm entwickelte Wärme.

Durch die Erfindung soll die Aufgabe gelöst werden, die Wähleinrichtung so auszubilden, daß die Sperrvorrichtung des Wählhebels auch dann automatisch und sicher entsperrt werden kann, wenn relativ zum Stand der Technik kleinere oder leistungsschwächere Stellglieder benutzt werden oder wenn am Wählhebel, bevor die für das Entsperren der Sperrvorrichtung erforderlichen Betriebsbedingungen vorliegen, eine größere manuelle Betätigungskraft ausgeübt wird.

Diese Aufgabe wird gemäß der Erfindung durch die kennzeichnenden Merkmale von Anspruch 1 gelöst.

Weitere Merkmale der Erfindung sind in den Unteransprüchen enthalten.

Ein weiterer Vorteil der Erfindung ist, daß die Länge des Hebelarmes von der Drehachse (Z) des ersten Sperrkörpers zu dessen sperrkontur für alle Punkte dieser Sperrkontur ungefähr gleich groß ist. Dadurch ist für eine bestimmte manuelle Kraft am Wählhebel immer die gleiche Entsperr-Kraft durch ein stellglied erforderlich. Dadurch braucht das Stellglied keine an einen ungünstigsten Hebelarm angepaßte große Stellkraft zu haben, und der Fahrer des Fahrzeuges kann sich an ein immer gleich bleibendes Schaltverhalten gewöhnen, was den Fahrkomfort erhöht.

Die Erfindung wird im folgenden mit Bezug auf die Zeichnungen anhand von bevorzugten Ausführungsformen als Beispiele beschrieben. In den Zeichnungen zeigen
- Fig. 1: eine schematische Draufsicht auf eine Wähleinrichtung nach der Erfindung,
- Fig. 2: eine Seitenansicht der Wähleinrichtung in Richtung eines Pfeiles II von Fig. 1 gesehen,
- Fig. 3: eine Rückansicht der Wähleinrichtung in Richtung eines Pfeiles III in Fig. 2 gesehen,
- Fig. 4: die Wähleinrichtung von Fig. 1 in ununterbrochenen Linien in einer Parkposition P und in punktierten Linien in einer Rückwärtsfahrposition R eines Wählhebels, wobei die Zeichnung durch eine Abdeckplatte mit einer Führungskulisse für den Wählhebel ergänzt ist und zur deutlicheren Darstellung der Erfindung angenommen wurde, daß die normalerweise undurchsichtige Abdeckplatte durchsichtig sei,
- Fig. 5: eine weitere Ausführungsform einer Wähleinrichtung nach der Erfindung mit zwei sperrbaren Wählhebelpositionen,
- Fig. 6: eine Draufsicht auf eine weitere Ausführungsform einer Wähleinrichtung nach der Erfindung,
- Fig. 7: eine Draufsicht auf die Wähleinrichtung von Fig. 6 mit einer in ununterbrochenen Linien gezeichneten Parkposition P und einer in punktierten Linien gezeichneten Neutralposition N eines Wählhebels und eines Sperrkörpers,
- Fig. 8: eine Schnittansicht der Wähleinrichtung von Fig. 6 in der Schnittebene VIII-VIII mit einem zweiten Sperrkörper, welcher in ununterbrochenen Linien in Sperrstellung und in punktierten Linien in einer entsperrten Stellung dargestellt ist,
- Fig. 9: eine Schnittansicht in der Schnittebene IX-IX in Fig. 7, welche den zweiten Sperrkörper in einer Sperrstellung zeigt, in welcher er den ersten Sperrkörper in der in Fig. 7 punktierten Neutralposition N sperrt,
- Fig. 10: eine Draufsicht auf eine weitere Ausführungsform einer Wähleinrichtung nach der Erfindung zur betriebsabhängigen Sperrung einer Querbewegung eines Wählelements, welches in Fahrzeugquerrichtung und in Fahrzeuglängsrichtung bewegbar angeordnet ist,
- Fig. 11: eine Seitenansicht der Wähleinrichtung in Sperrstellung in Richtung eines Pfeiles XI in Fig. 10 gesehen und
- Fig. 12: die Wähleinrichtung in der gleichen Seitenansicht wie Fig. 11, jedoch in entsperrter Stellung.

Als Wählelement kann ein nicht schwenkbarer, quer zur Hebellängsrichtung linear geführter Wählhebel oder entsprechend den nachfolgend beschriebenen Ausführungsformen ein schwenkbar gelagerter Wählhebel verwendet werden.

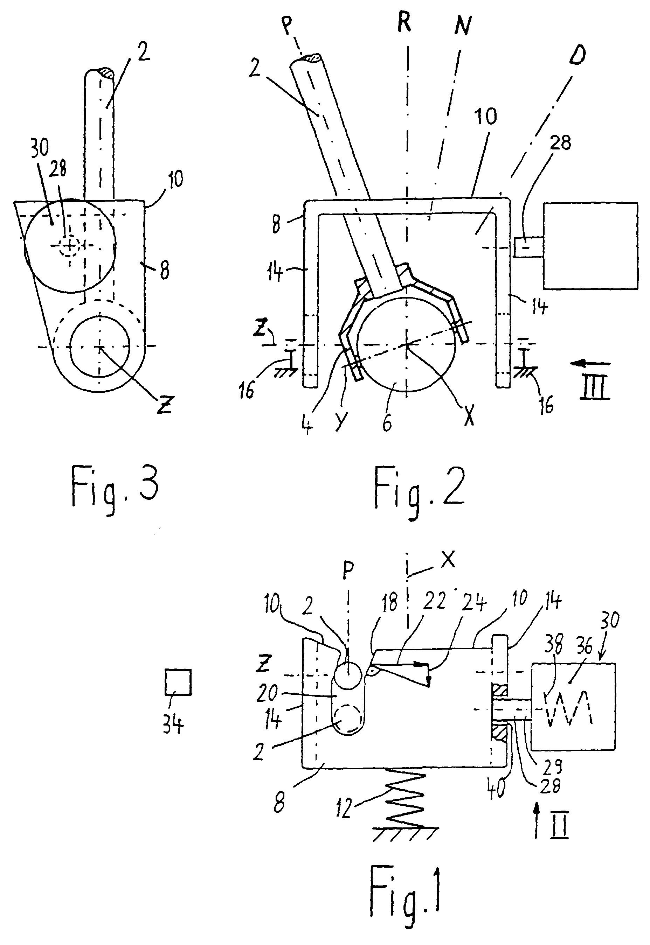

Die Wähleinrichtung nach den Figuren 1, 2 und 3 enthält einen wählhebel 2, welcher über eine Gabel 4, an seinem unteren Ende mit einer Wählhebelwelle 6 in Drehrichtung um deren Drehachse X starr und rechtwinklig dazu in Längsrichtung der Wählhebeldrehachse X um eine Quer-Drehachse Y schwenkbar verbunden ist. Die beiden Drehachsen X und Y kreuzen sich rechtwinklig.

Ein erster Sperrkörper 8 hat in der Ansicht von Fig. 2 die Form eines U und ein dem Wählhebel 2 zugewandter Rand 10 des Stegteiles der U-Form ist entlang des Bewegungsweges des Wählhebels 2 als Sperrflächenkontur ausgebildet, an welcher der Wählhebel 2 entlang bewegbar ist. Bei einer solchen Bewegung des Wählhebels 2 entlang einer ersten Sperrflächenkontur 10 drückt er in Abhängigkeit von Erhöhungen und Vertiefungen der Sperrflächenkontur 10 den ersten Sperrkörper 8 entgegen der Federkraft einer Rückholfeder 12 mehr oder weniger weit rechtwinklig quer zur Wählhebelbewegungsrichtung weg. Die Rückholfeder 12 ist als Druckfeder dargestellt, bei einer entgegengesetzten Anordnung kann sie auch eine Zugfeder sein. Selbstverständlich können auch mehrere Federn verwendet werden. Der erste Sperrkörper 8 ist an seinen Schenkeln 14 in ortsfesten Lagern 16 um eine Sperrkörperdrehachse Z schwenkbar gelagert, welche in Richtung einer zu sperrenden Bewegung des Wählhebels 2 verläuft, was bei der dargestellten Ausführungsform eine Bewegung des Wählhebels 2 um die Wählhebeldrehachse X ist, zu welcher deshalb die Sperrkörperdrehachse Z rechtwinklig, vorzugsweise kreuzend, angeordnet ist.

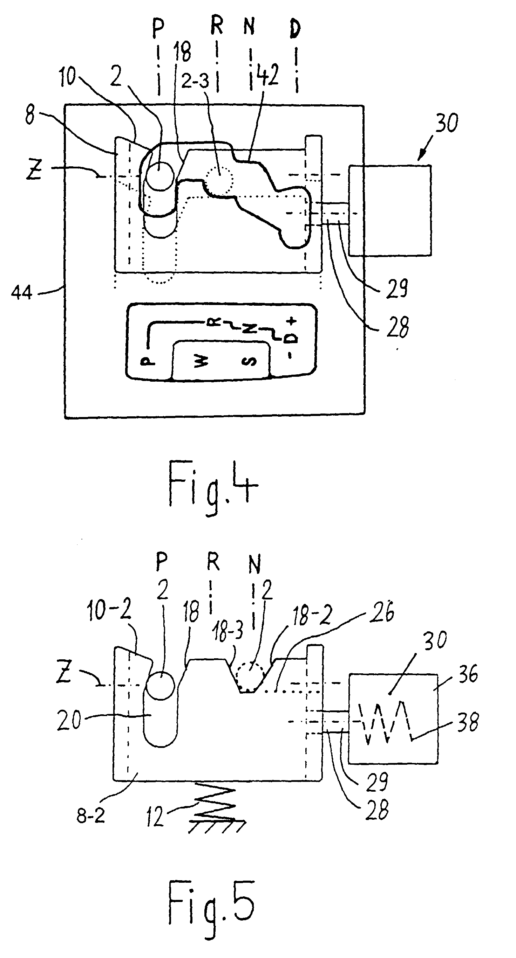

Eine schräge Sperrfläche 18 der Sperrflächenkontur 10 befindet sich an der zu sperrenden Position des Wählhebels 2, was jede mögliche Position des Wählhebels 2 sein kann und beim vorliegenden Beispiel seine Parkposition P ist. Der Wählhebel 2 kann in der Parkposition P in einem durcn die Sperrflächenkontur 10 gebildeten Schlitz 20 gemäß Fig. 1 von einer gestrichelt gezeichneten Endstellung um die Quer-Drehachse Y in die in ununterorochenen Linien gezeichnete Zwischenstellung bewegt werden, wo er der schrägen Sperrfläche 18 gegenüberliegt. Die Sperrfläche 18 erstreckt sich schräg zur Bewegungsrichtung, in welcher der Wählhebel 2 gesperrt werden soll, und schräg zur Bewegungsrichtung, in welcher der erste Sperrkörper 8 dem Wählhebel 2 ausweichen kann. Wenn der Wählhebel 2 an der schrägen Sperrfläche 18 anliegt, wird eine von einem Fahrer am Wählhebel 2 ausgeübte manuelle Kraft an der schrägen Sperrflache 18 im ersten Sperrkörper 8 in zwei Kraftkomponenten 22 und 24 zerlegt. Die eine Kraftkomponente 22 wirkt in Wählhebelbewegungsrichtung und die andere Kraftkomponente 24 wirkt rechtwinklig dazu in der Bewegungsrichtung des ersten Sperrkörpers 8, in welcher er dem Wählhebel ausweichen kann. Die Kraftkomponente 24 in Sperrkörperbewegungsrichtung ist um ein vielfaches kleiner als die am Wählhebel 2 manuell erzeugte Kraft. Durch die Kraftkomponente 24 in Sperrkörperbewegungsrichtung wird der Sperrkörper 8 in die in Fig. 4 punktiert gezeichnete Stellung bewegt und der Wählhebel 2 kann von der Parkposition P in die Rückwärtsfahrposition R bewegt werden, welche in Fig. 4 ebenfalls in punktierten Linien dargestellt und mit 2-3 bezeichnet ist. Wenn der Wählhebel 2 in seine Parkposition R bis zum Schlitz 20 zurückbewegt wird, wird der Sperrkörper 8 von der Rückholfeder 12 wieder in seine Ausgangsposition von Fig. 1 zurückbewegt.

Der Sperrkörper 8 kann an seiner schrägen Sperrfläche 18 vom Wählelement 2 in der durch einen Pfeil 24 angegebenen Kraftkomponente in Bewegungsrichtung nur dann weggedrückt werden, wenn alle Betriebsbedingungen erfüllt sind und der Sperrkörper 8 deshalb in Sperrkörperbewegungsrichtung nicht gesperrt ist. In der Parkposition P können solche Bedingungen, damit der Sperrkörper 8 entsperrt wird, sein, daß die Zündung eingeschaltet ist oder zumindest der Zündschlüssel im Zündschloss steckt und die Fahrzeugbremse in Bremsstellung ist. Solange solche Betriebsbedingungen nicht erfüllt sind, wird die Bewegung des Sperrkörpers 8 durch einen zweiten Sperrkörper 28 gesperrt, welcher in Sperrposition den Bewegungsweg des ersten Sperrkörpers 8 sperrt. Dadurch kann auf den zweiten Sperrkörper 28 nur die in Bewegungsrichtung des ersten Sperrkörpers 8 gerichtete kleine Kraftkomponente 24 einer an Wählhebel 2 ausgeübten manuellen Betätigungskraft wirken. Diese Kraftkomponente 24 der manuellen Betätigungskraft wirkt aber nur dann auf den zweiten Sperrkörper 28, wenn ein Fahrer die manuelle Kraft am Wählhebel 2 anbringt, bevor alle Betriebsbedingungen zum Entsperren des ersten Sperrkörpers 8 gegeben sind, beispielsweise dann, wenn der Fahrer vergessen hat, die Bremse in Bremsposition zu bringen. Wenn alle Betriebsbedingungen erfüllt sind, bevor eine manuelle Kraft am Wählhebel 2 ausgeübt wird, kann der zweite Sperrkörper 28 von einer Stellantriebsvorrichtung 30 aus dem Bewegungsweg des ersten Sperrkörpers 8 bewegt werden, ohne daß hemmende Kräfte auf ihn wirken. Durch die schräge Anordnung der Sperrfläche 18 ist die manuelle Kraftkomponente 24, welche auf den zweiten Sperrkörper 28 wirken kann, so klein, daß eine kleine Kraft der Stellantriebsvorrichtung 30 ausreicht, um den zweiten Sperrkörper 28 aus dem Bewegungsweg des ersten Sperrkörpers 8 in eine entsperrte Stellung zu bewegen.

Bei der Ausführungsform nach den Figuren 1, 2 und 3 weist die Stellantriebsvorrichtung 30 einen von einer elektronischen Steuereinrichtung 34 in Abhängigkeit von den Betriebsbedingungen aktivierten Elektromagneten 36 und eine Positionierfeder 38 auf. Der zweite Sperrkörper 28 kann ein Nocken, eine Klinke oder entsprechend der dargestellten Ausführungsform ein Teil eines Ankers 29 sein, welcher von der Positionierfeder 38 mit einer Sperrfläche 40 einer zweiten Sperrflächenkontur des ersten Sperrkörpers 8, beispielsweise einer Bohrung, in Eingriff gebracht werden kann, wie dies Fig. 1 zeigt, oder vom Elektromagneten 36, wenn er eingeschaltet wird, entgagen der Federkraft in den Elektromagneten 36 hinein in ehe Entsperrstellung gezogen werden kann. Fig. 2 zeigt den zweiten Sperrkörper 28 in einer Entsperrstellung außerhalb des Bewegungsweges des ersten Sperrkörpers 8.

Der Bewegungsweg des Wählhebels 2 ist durch eine Führungskulisse 42 in einer Abdeckplatte 44 vorgegeben, wie dies Fig. 4 zeigt. Fig. 4 ist so gezeichnet, als wäre die Abdeckplatte 44 aus einem durchsichtigen Material, damit die darunter angeordneten Sperrkörper 8 und 28 besser dargestellt werden können.

Wenn der Wählhebel 2 die schräge Sperrfläche 18 in Richtung von seiner Parkposition P zur Rückwärtsfahrposition R verlassen hat, kann der Elektromagnet 36 wieder ausgeschaltet werden. Erst nach dem Zurückbewegen des Wählhebels 2 in Parkposition P wird der zweite Sperrkörper 28 bzw. der Magnetanker von der Positionierfeder 38 wieder in Eingriff mit der Sperrfläche 40 der zweiten Sperrflächenkontur des ersten Sperrkörpers 8 gebracht.

Die in Fig. 5 in Draufsicht gezeigte weitere Ausführungsform eines ersten Sperrkörpers 8-2 hat in seiner Sperrflächenkontur 10-2 an der Neutralposition N eine in der gleichen Richtung wie die erste Sperrfläche 18 angeordnete zweite schräge Sperrfläche 18-2 und eine entgegengesetzt schräg angeordnete dritte schräge Sperrfläche 18-3. Der Wählhebel 2 kann in der Neutralposition N an der zweiten schrägen Sperrfläche 18-2 in der gleichen Weise an einer Weiterbewegung in die Vorwärtsfahrposition D gesperrt und entsperrt werden von der Stellantriebsvorrichtung 30, wie dies vorstehend mit Bezug auf Fig. 1 beschrieben wurde. Hierbei kann das Sperren und Entsperren in Abhängigkeit von den gleichen und /oder anderen Betriebsbedingungen erfolgen, beispielsweise dann, wenn der Motor des Kraftzanrzeuges aucn in der Neutralposition N aus- und einschaltbar sein soll, z.B. in einer Autowaschanlage. Die entgegengesetzt schräge dritte Sperrfläche 18-3 kann den Wählhebel 2 in der Neutralposition N an einer Rückwärtsbewegung in die Rückwärtsfahrposition R sperren, wenn die Fahrzeuggeschwindigkeit größer als Null oder größer als ein Grenzwert von beispielsweise 8 km/h ist. Hierbei hält die Positionierfeder 38 den zweiten Sperrkörper 28 in Eingriff mit der Sperrfläche 40 der zweiten Sperrflächenkontur des ersten Sperrkörpers 8. Wenn die Fahrzeuggeschwindigkeit unter dem Grenzwert liegt, wird der Elektromagnet 36 von der elektronischen Steuereinrichtung 34 eingeschaltet, so daß er den zweiten Sperrkörper 28 bzw. seinen Elektromagneten aus dem Eingriffsbereich der Sperrfläche 40 der zweiten Sperrflächenkontur heraus bewegt. Jetzt kann der Wählhebel 2 über die zweite oder dritte schräge Sperrfläche 8-2 oder 8-3 in eine seiner benachbarten Positionen D oder R bewegt werden. Wenn die zweite Sperrfläche 18-2, und damit die Sperre von N nach D, weggelassen wird, dann hat die Sperrflächenkontur 10-2 den Verlauf einer punktierten Linie gemäß Fig. 5.

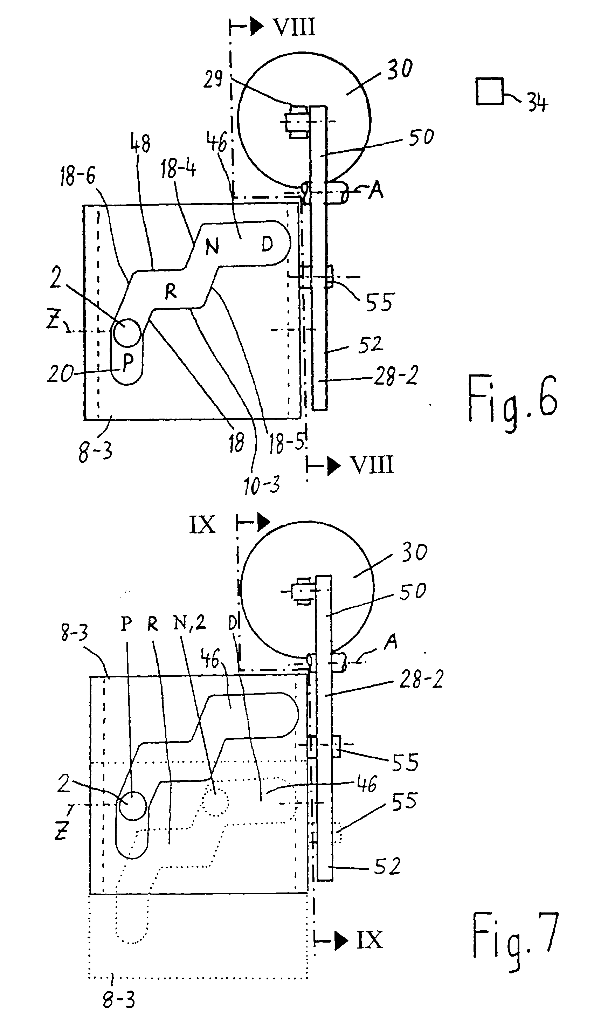

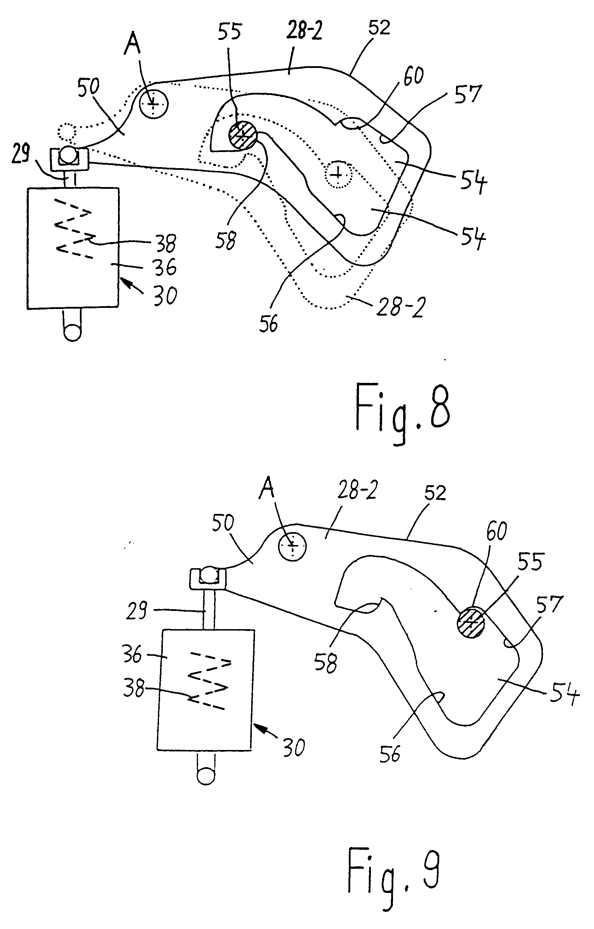

Bei der weiteren Ausführungsform nach den Figuren 6 - 9 hat ein erster Sperrkörper 8-3 in einem Sperrkulissenschlitz 46 zusätzlich zur ersten schrägen Sperrfläche 18 in der Parkposition P eine zweite schräge Sperrfläche 18-4 in der Neutralposition N des Wählhebels 2. Die zweite schräge Sperrfläche 18-4 zeigt in eine Richtung, welche zu der Richtung entgegengesetzt ist, in welche die eine schräge Sperrfläche 18 zeigt. Die beiden schrägen Sperrflächen 18 und 18-4 sind an einander gegenüberliegenden Rändern 10-3 und 48 des Sperrkulissenschlitzes 46 mit Abstand in Schlitzlängsrichtung voneinander gebildet. Die Figuren 6 und 7 zeigen in ununterbrochenen Linien den Wählhebel 2 und den ersten Sperrkörper 8-3 in Parkposition P. Fig. 7 zeigt in punktierten Linien zusätzlich den Wählhebel 2 und den ersten Sperrkörper 8-3 in der Neutralposition N. Zwischen der Parkposition P und der Neutralposition N liegt aie Rückwärtsfahrposition R. Nach der Neutralposition N liegt die mindestens eine Vorwärtsposition D.

Wenn der erste Sperrkörper 8-3 entsperrt ist, kann er vom Wählhebel 2 an der ersten schrägen Sperrfläche 18 von der in ausgezogenen Linien gezeigten Stellung in die in punktierten Linien gezeigte Stellung weggedrückt und dabei um seine Drehachse Z geschwenkt werden. Dabei kann der Wählhebel 2 durch eine manuelle Kraft von der Parkposition P durch die Rückwärtsfahrposition R in die in Fig. 7 punktiert dargestellte Neutralposition N und darüber hinaus in die Vorwärtsfahrposition D bewegt werden. Die zweite schräge Sperrfläche 18-4 an dem gegenüberliegenden Rand 48 sperrt den Wählhebel 2 nur und immer dann an einer Zurückbewegung von der Neutralposition N in die Rückwärtsfahrposition R, wenn der erste Sperrkörper 8-3 gesperrt ist. Der zweiten schrägen Sperrfläche 18-4 des anderen Kulissenschlitzrandes 48 liegt eine dritte schräge Sperrfläche 18-5 des einen Kulissenschlitzrandes 10-3 gegenüber, an welcher der Wählhebel 2 den ersten Sperrkörper 8-3 in eine Sperrstellung drängen kann, in welcher der Wählhebel 2 in der Neutralposition N in Richtung zur Rückwärtsfahrposition R gesperrt wird. Die dritte Sperrfläche 18-5 ist parallel zur ersten Sperrfläche 18. An einer der ersten schrägen Sperrfläche 18 gegenüberliegenden vierten schrägen Sperrfläche 18-5 kann der Wählhebel 2 auf dem Weg zur Parkposition P den entsperrten ersten Sperrkörper 8-3 um seine Drehachse Z wieder in seine ursprüngliche Ausgangsposition zurückbewegen, welche in ununterbrochenen Linien dargestellt ist. Es ist keine Federkraft erforderlicn, jedoch kann auch bei dieser Ausführungsform eine Rückholfeder 12 entsprechend Fig. 1 vorgesehen sein.

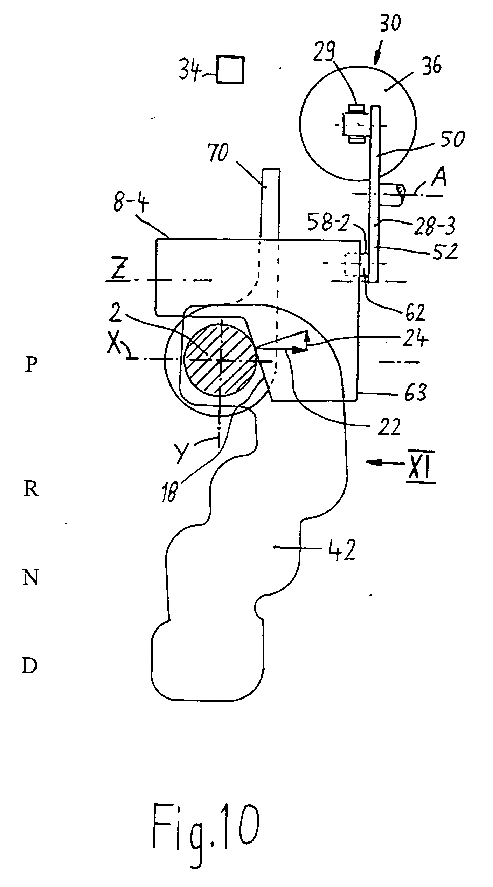

Zum Sperren und Entsperren des ersten Sperrkörpers 8-3 ist ein zweiter Sperrkörper 28-2 in Form einer Sperrklinke vorgesehen. Die Sperrklinke 28-2 ist gemäß den Figuren 6-9 um eine Drehachse A schwenkbar gelagert, welche ortsfest und zur ebenfalls ortsfesten Drehachse Z des ersten Sperrkörpers 8-3 parallel angeordnet ist. Die Sperrklinke 28-2 hat einen von der Stellantriebsvorrichtung 30 betätigten Hebelarm 50 und einen weiteren Hebelarm 52, in welchem ein Sperrkulissenschlitz 54 gebildet ist. Die Sperrklinke 28-2 ist neben dem ersten Sperrkörper 8-3 parallel zu dessen Bewegungsweg angeordnet. Ein Sperrnocken 55, welcher am ersten Sperrkörper 8-3 befestigt ist, ragt in den Kulissenschlitz 54 der Sperrklinke 28-2. An einander gegenüberliegenden Rändern 56 und 57 des Kulissenschlitzes 54 ist je eine Klinkensperrfläche 58 bzw. 60 gebildet, die in Längsrichtung des Kulissenschlitzes 54 mit Abstand voneinander angeordnet sind und voneinander weg in entgegengesetzte Richtungen zeigen. Die eine Klinkensperrfläche 58 sperrt den Sperrnocken 55 und damit auch den ersten Sperrkörper 8-3 in der ersten Parkposition P des Wählhebels 2, wie dies in den Figuren 6, 7 und 8 in ununterbrochenen Linien dargestellt ist. Die andere Klinkensperrfläche 60 sperrt den Sperrnocken 55 und damit den ersten Sperrkörper 8-3 in seiner der Neutralposition N des Wählhebels 2 entsprechenden Stellung, welche in Fig. 9 in ununterbrochenen Linien und in Fig. 7 in punktierten Linien dargestellt ist. Die Sperrstellung der Sperrklinke 28-2 in der Neutralposition N, welche in Fig. 9 gezeigt ist, entspricht der entsperrten Stellung dieser Sperrklinke 28-2 in der Parkposition P, welche in Fig. 8 in punktierten Linien dargestellt ist.

Die Stellantriebsvorrichtung 30 enthält eine Positionierfeder 38, welche über einen Anker 29 eines Elektromagneten 36 die Sperrklinke 28-2 mit Bezug auf die Figuren 8 und 9 in Gegenuhrzeiger-Drehrichtung in die in Fig. 8 in ununterbrochenen Linien dargestellte Sperrstellung drängt, in welcher sie den Sperrnocken 56 und damit den ersten Sperrkörper 8-3 sperrt, wenn sich der Wählhebel 2 in Parkposition P befindet. Wenn alle Betriebsbedingungen zum Starten des Fahrzeuges erfüllt sind, beispielsweise Zündung eingeschaltet ist una die Bremse in Bremsstellung ist, wird von der elektronischen Steuereinrichtung 34 der Elektromagnet 36 mit Strom versorgt und dadurch eingeschaltet. Dadurch drückt der Elektromagnet 36 seinen Anker 29 heraus in eine vorgerückte Stellung und schwenkt dadurch die Sperrklinke 28-2 in Uhrzeiger-Drehrichtung in die in Fig. 8 in punktierten Linien dargestellte Entsperrstellung, welche auch der in Fig. 9 gezeigten Sperrklinkenstellung entspricht, bei welcher der Sperrnocken 55 von der einen Klinkensperrfläche 58 freigegeben wird. Jetzt kann der Wählhebel 2 durch eine manuelle Kraft den ersten Sperrkörper 8-3 an seiner schrägen Sperrfläche 18 wegdrücken und von der Parkposition P in die Rückwärtsposition R und weiter in seine anderen Positionen N und D bewegt werden. An einer Stelle zwischen der Parkposition P und der Rückwärtsfahrposition R, wo keine Sperrung mit der Sperrfläche 58 mehr möglich ist, wird der Elektromagnet 36 von der Steuereinrichtung 34 automatisch wieder ausgeschaltet. Jetzt kann der Sperrnocken 55 außerhalb des Bereichs der einen Klinkensperrfläche 58 im Kulissenschlitz 54 frei bewegt werden. Wenn jedoch in der Neutralposition N und vorzugsweise bereits in der Vorwärtsfahrposition D des Wählelements 2 die Fahrgeschwindigkeit des Fahrzeuges schneller ist als ein bestimmter Geschwindigkeitsgrenzwert, dann schaltet die Steuereinrichtung 34 den Elektromagneten 36 automatisch wieder ein, damit er die Sperrklinke 28-2 in Uhrzeiger-Drehrichtung in die in Fig. 9 dargestellte Sperrstellung bewegt, bei welcher die andere Klinkensperrfläche 60 den Sperrnocken 55 an einer Rückwärtsbewegung und damit den Wählhebel 2 an einer Rückwärtsbewegung von der Neutralposition N in die Rückfahrposition R sperrt. Die Entsperrposition der Sperrklinke 28-2 für ihre eine Klinkensperrfläche 58 ist somit die Sperrposition dieser gleiche Sperrklinke 28-2 für ihre andere Klinkensperrfläche 60. Wenn die Fahrzeuggeschwindigkeit unter den Grenzwert absinkt, wird der Elektromagnet 36 automatisch wieder ausgeschaltet, so daß dann die Positionierfeder 38 die Sperrklinke 28-2 wieder in Gegenuhrzeiger-Drehrichtung in die in Fig. 1 in ununterbrochenen Linien dargestellte Stellung zurückschwenkt, bei welcher die andere Klinkensperrfläche 60 den Sperrnocken 55 freigibt. Damit kann der Wählhebel 2 im Kulissenschlitz 54 wieder in beiden Längsrichtungen frei bewegt werden. Wenn er die Parkposition P erreicht, wird der Sperrnocken 55 an der einen Klinkensperrfläche 58 wieder solange gesperrt, bis die Betriebsbedingungen für Rückwärtsfahrt oder Vorwärtsfahrt wieder vorliegen, also insbesondere die Zündung eingeschaltet ist und die Fahrzeugbremse in Bremsstellung ist.

Die Sperre des Wählhebels 2 in der Parkposition P wird als P-Sperre bezeichnet. Die Sperre in der Neutralposition N wird als R-Sperre bezeichnet, weil sie in Abhängigkeit von den Betriebsbedingungen eine Einstellung des Wählhebels 2 in Richtung von der Neutralposition N in die Rückwärtsfahrposition R sperrt.

Bei den vorstehend beschriebenen Ausführungsformen wird der Wählhebel 2 in einer Bewegungsrichtung gesperrt, welche in Fahrzeuglängsrichtung verläuft. Die Erfindung ist jedoch auch verwendbar zum Sperren des Wählhebels in einer quer dazu verlaufenden Bewegungsrichtung. Diese Möglichkeit wird im folgenden mit Bezug auf die in den Figuren 10, 11 und 12 dargestellte weitere Ausführungsform beschrieben.

Der Wählhebel 2 ist in der Führungskulisse 42 um eine Wählhebeldrehachse X in Fahrzeuglängsrichtung und um eine um 90° quer dazu verlaufende Quer-Drehachse Y in Fahrzeugquerrichtung schwenkbar, unter anderem in der Parkposition P von einer in Fig. 10 dargestellten Endstellung von links nach rechts, bevor er dann von dieser Parkposition P in Fahrzeuglängsrichtung, und teilweise auch wieder in Querrichtung, zu den anderen Positionen R, N und D schwenkbar ist. Ein erster Sperrkörper 8-4 ist um eine zur Wählhebeldrehachse X parallele Drehachse Z drehbar gelagert und hat eine schräge Sperrfläche 18, welche im Bewegungsweg des Wählhebels 2 liegt und ihm den Weg aus der Endstellung der Parkposition P heraus versperrt. Die schräge Sperrfläche 18 erstreckt sich schräg zur Querbewegungsrichtung des Wählhebels 2 und schräg zur Bewegungsrichtung des Sperrkörpers 8-4. Dadurch wird eine manuelle Querkraft am Wählhebel 2 an der schrägen Sperrfläche 16 in eine Kraftkomponente 22 in dieser Querrichtung und in eine kleine Kraftkomponente 24 zerlegt, welche letztere den Sperrkörper 8-4 in Richtung dieser Kraftkomponente 24 vom Wählhebel 2 weg in eine den Wählhebel 2 freigebende Entsperrstellung bewegt, wenn der erste Sperrkörper 8-4 nicht von einem zweiten Sperrkörper 28-3 gesperrt wird.

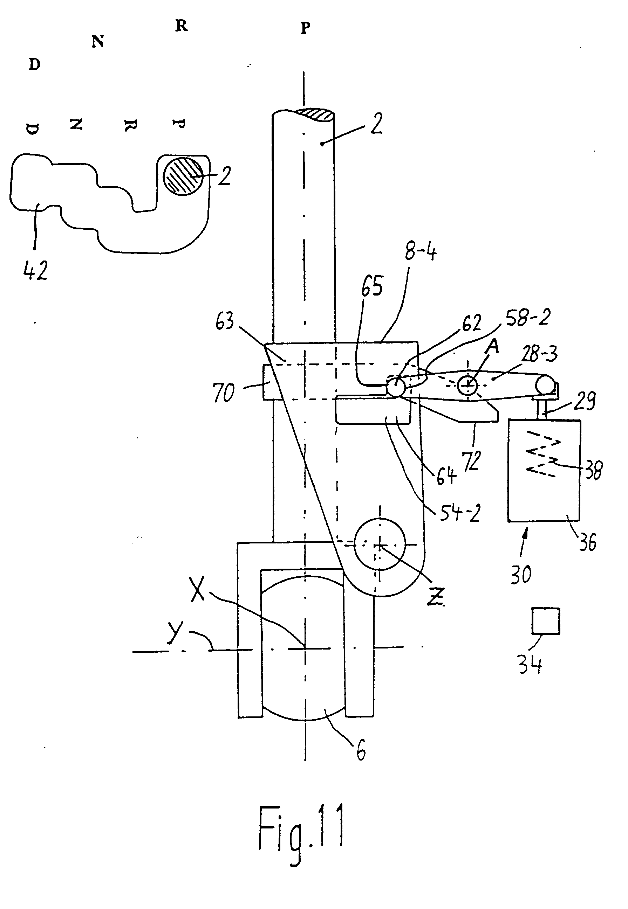

Der zweite Sperrkörper 28-3 kann eine Sperrklinke wie die Sperrklinke 28-2 mit der einen Klinkensperrfläche 58 der Figuren 8 und 9 oder eine Ausführung sein, wie sie in den Figuren 10, 11 und 12 dargestellt ist. Der dort gezeigte zweite Sperrkörper 28-3 ist eine doppelarmige Sperrklinke, welche um eine Drehachse A drehbar ist, die parallel zur Wählhebeldrehachse X und damit rechtwinklig zur Quer-Drehachse Y angeordnet ist. Damit ist sie auch parallel zur Drehachse Z des ersten Sperrkörpers 8-4 angeordnet. Die Sperrklinke 28-3 hat einen von der Stellantriebsvorrichtung 30 betätigten Hebelarm 50 und einen weiteren Hebelarm 52, welcher an seinem freien Ende einen Nocken 62, vorzugsweise eine frei drehbare Rolle trägt. Die Außenumfangsfläche des Sperrnockens 62 bildet eine Klinkensperrfläche 58-2, welche in einen L-förmigen Sperrkulissenschlitz 54-2 eingreift, welcher in einer quer zur Sperrkulissen-Drehachse Z sich erstreckenden Seitenwand 63 des ersten Sperrkörpers 8-4 gebildet ist. Der Sperrkulissenschlitz 54-2 hat einen tangential zur Umfangsrichtung dieser Drehachse Z sich erstreckenden Schenkel 64 und an dessen der Sperrklinke 28-3 zugewandten Ende einen sich nach oben erstreckenden Schenkel 65. Die Positionierfeder 38 der Stellantriebsvorrichtung 30 halt über den Magnetanker 29 den Sperrnocken 62 in dem sich nach oben erstreckenden Schlitzschenkel 65 und damit den ersten Sperrkörper 8-4 in Sperrstellung. Fig. 10 und Fig. 11 zeigen den Wählhebel 2 in der Führungskulisse 42 in Endstellung seiner Parkposition P.

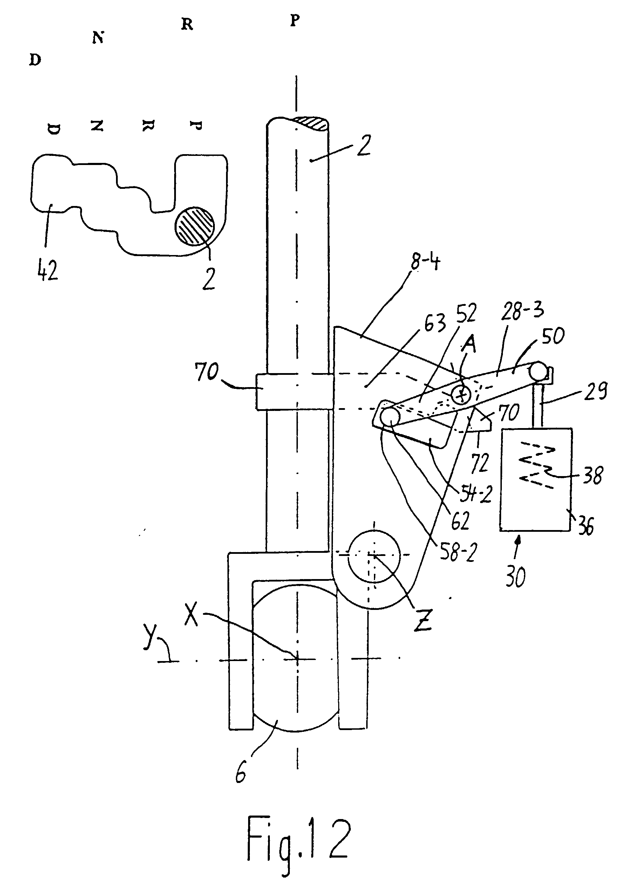

Wenn die zum Starten des Fahrzeuges erforderlichen Betriebsbedingungen wie beispielsweise Zündschlüssel im Zündschloss und Bremse in Bremsstellung, erfüllt sind, wird der Elektromagnet 36 von der elektronischen Steuereinrichtung 34 automatisch eingeschaltet, so daß er den Sperrnocken 62 aus dem vertikalen Schenkel 65 in den horizontalen Schenkel 64 des Sperrkulissenschlitzes 54-2 schwenkt. Damit ist der erste Sperrkörper 8-4 entsperrt und kann vom Wählhebel 2 durch eine manuelle Kraft aus dem Querbewegungsweg des Wählhebels 2 weggedrückt werden, wenn der Wählhebel 2 in Querrichtung um seine Quer-Drehachse Y manuell belastet wird. Damit wird der in Fig. 12 gezeigte Schaltzustand erreicht, von welchem der Wählhebel 2 dann in Fahrzeuglängsrichtung zur Rückwärtsfahrposition R und darüber hinaus in eine Neutralposition N und eine Vorwärtsfahrposition D bewegt werden kann. Außerhalb der Parkposition P, zwischen ihr und der Rückwärtsfahrposition R des Wählhebels 2, wird der Elektromagnet 36 automatisch wieder ausgeschaltet und die Positionierfeder 38 bewegt den Magnetanker 29 und die Sperrklinke 28-3 und damit auch den ersten Sperrkörper 8-4 von der Ensperrstellung in Fig. 12 in die Sperrstellungen von Fig. 10 und 11 zurück. Damit versperrt der erste Sperrkörper 8-4 dem Wählhebel 2 den Weg von der Rückwärtsfahrposition R zurück in die Parkposition P. Damit nicht der Elektromagnet 36 oder eine Rückholfeder 12 den ersten Sperrkörper 8-4 entsperren muß, ist am Wählhebel 2 ein Entsperrhebel 70 befestigt. Dieser hat an seiner Spitze eine Entsperrfläche 72, welche den Sperrnocken 62 der Sperrklinke 28-3 übergreift und aus dem vertikalen Schlitzschenkel 65 in den horizontalen Schlitzschenkel 64 des Sperrkulissenschlitzes 54-2 in eine Entsperrposition drückt, in welcher der erste Sperrkörper 8-4 entsperrt ist und vom Wahlhebel 2 durch eine manuelle Kraft aus dem Bewegungsweg des Wählhebels 2 heraus gedrückt werden kann, wenn der Wahlhebel 2 von seiner Rückwärtsfahrposition R in seine in Fig. 10 und 11 gezeigte Parkposition P zurück bewegt wird.

Die Positionierfeder 38 kann in den Elektromagneten 36 integriert sein und an dessen Anker 29 angreifen oder außerhalb des Elektromagneten 36 angeordnet sein und an der Sperrklinke 28-3 der Figuren 10-12 oder der Sperrklinke 28-2 der Figuren 6 -9 angreifen. Die Positionierfeder 38 kann eine Druckfeder oder eine Zugfeder sein, abhängig davon, in welcher Richtung sie zu dem zu betätigenden Element angeordnet wird.

## Patentansprüche

1. Wähleinrichtung für ein automatisches Kraftfahrzeuggetriebe, enthaltend einen Wählhebel (2), welcher zum Wählen von Schaltstellungen des Kraftfahrzeuggetriebes längs eines vorbestimmten Bewegungsweges in Hebel-Querrichtung auf verschiedene Positionen (P, R, N, D) manuell einstellbar ist; einen ersten Sperrkörper (8; 8-2; 8-3; 8-4), welcher um eine Drehachse (Z) in einer Bewegungsrichtung bewegbar angeordnet ist, welche rechtwinkelig zu der Richtung einer zu sperrenden Bewegung des Wählhebels (2) verläuft und welcher eine Sperrflächenkontur mit mindestens einer ersten schrägen Sperrfläche (18; 18-3; 18-4) aufweist, welche in Wählhebel-Sperrstellung vor dem Wählhebel in dessen Bewegungsweg liegt und zur Bewegungsrichtung des Wählhebels und der Bewegungsrichtung des ersten Sperrkörpers derart schräg verläuft, daß eine manuelle Kraftkomponente (22) am Wählhebel (2) an der schrägen Sperrfläche in eine rechtwinkelig zur schrägen Sperrfläche verlaufende Kraftkomponente und in eine rechtwinkelig zur manuellen Kraftkomponente (22) gerichtete Kraftkomponente (24) zerlegt wird, welch letztere in Entsperr-Bewegungsrichtung des ersten Sperrkörpers (8; 8-2; 8-3; 8-4) gerichtet ist; einen zweiten Sperrkörper (28; 28-2; 28-3), welcher relativ zum ersten Sperrkörper (8; 8-2; 8-3; 8-4) bewegbar angeordnet ist und von einer Stellantriebsvorrichtung (30) in Abhängigkeit von vorbestimmten Betriebsbedingungen automatisch zwischen einer den ersten Sperrkörper in einer vorbestimmten Position sperrenden Stellung und einer ihn nicht-sperrenden Stellung bewegbar ist;
**dadurch gekennzeichnet,**
daß die Drehachse (Z) des ersten Sperrkörpers (8; 8-2; 8-3; 8-4) zur Richtung der zu sperrenden Bewegung des Wählhebels (2) parallel angeordnet ist und daß die mindestens eine schräge Sperrfläche (18; 18-3; 18-4) des ersten Sperrkörpers in eine die Wählhebellängsrichtung kreuzende Richtung gerichtet ist.

2. Wähleinrichtung nach Anspruch 1,
**dadurch gekennzeichnet,**
daß der Wählhebel (2) um mindestens eine Wählhebel-Drehachse (X) drehbar angeordnet ist.

3. Wähleinrichtung nach Anspruch 1,
**dadurch gekennzeichnet,**
daß der Wählhebel (2) um zwei zueinander rechtwinkelige Drehachsen (X, Y) je schwenkbar angeordnet ist, und daß der zu sperrende Bewegungsweg des Wählhebels (2) sich um eine dieser Drehachsen (Y) erstreckt.

4. Wähleinrichtung nach einem der vorhergehenden Ansprüche,
**dadurch gekennzeichnet,**
daß sich der Wählhebel (2) durch einen seinen Bewegungsweg bestimmenden Führungsschlitz (42) einer Führungsplatte (44) erstreckt.

5. Wähleinrichtung nach einem der vorhergehenden Ansprüche,
**dadurch gekennzeichnet,**
daß ein Federmittel (12) vorgesehen ist, welches den ersten Sperrkörper (8) in Richtung zum Wählhebel (2) drängt.

6. Wähleinrichtung nach einem der vorhergehenden Ansprüche,
**dadurch gekennzeichnet,**
daß mechanische Eingriffsmittel (18-5, 18-6; 70, 62, 54-2) zwischen dem ersten Sperrkörper (8-3; 8-4) und dem Wählhebel (2) vorgesehen sind, durch welche der Wählhebel (2) den ersten Sperrkörper (8-3; 8-4) in seine Sperrstellung (P, N) drängen kann.

7. Wähleinrichtung nach einem der vorhergehenden Ansprüche,
**dadurch gekennzeichnet,**
daß die Stellantriebsvorrichtung (30) ein Positionier-Federmittel (38), welches den zweiten Sperrkörper (28; 28-2; 28-3) in einer vorbestimmten Bewegungsrichtung in eine vorbestimmte erste Stellung drängt, und ein elektromagnetisches Stellmittel (36) aufweist, welches den zweiten Sperrkörper entgegen der Federkraft des Positionier-Federmittels in eine vorbestimmte zweite Stellung drängt, wenn es durch Stromzufuhr eingeschaltet wird, und daß mindestens eine dieser beiden Stellungen eine Sperrstellung ist, bei welcher der zweite Sperrkörper mit dem ersten Sperrkörper in Eingriff ist und ihn bei einer vorbestimmten Position (P, N) des Wählhebels (2) sperrt.

8. Wähleinrichtung nach Anspruch 7,
**dadurch gekennzeichnet,**
daß der zweite Sperrkörper ein Endabschnitt (28) eines Magnetankers (29) eines Elektromagneten (36) ist.

9. Wähleinrichtung nach einem der Ansprüche 1 bis 7,
**dadurch gekennzeichnet,**
daß der zweite Sperrkörper (28-2; 28-3) eine Sperrklinke mit mindestens einer Klinkensperrfläche (58, 60; 58-2) ist, welche von der Stellantriebsvorrichtung (30) um eine Drehachse (A) schwenkbar ist und in einer Drehstellung mit dem ersten Sperrkörper (8-3; 8-4) in einer ihn sperrenden Eingriffstellung ist, jedoch in einer anderen Drehstellung relativ zum ersten Sperrkörper in einer ihn nicht sperrenden Stellung ist.

10. Wähleinrichtung nach Anspruch 9,
**dadurch gekennzeichnet,**
daß die Klinkendrehachse (A) parallel zur Drehachse (Z) des ersten Sperrkörpers (8-3; 8-4) angeordnet ist.

11. Wähleinrichtung nach Anspruch 9,
**dadurch gekennzeichnet,**
daß der zweite Sperrkörper (28-2) eine, um eine zur Drehachse (Z) des ersten Sperrkörpers (8-3) parallele Drehachse (A) drehbar gelagerte, Sperrklinke ist, die einen Sperrkulissenschlitz (54) hat, in welchem auf einander gegenüberliegenden Schlitzlängsseiten zwei in Schlitzlängsrichtung voneinander weg zeigende Klinkensperrflächen (58, 60) gebildet sind, die an einem in den Sperrklinkenschlitz (54) ragenden Sperrnocken (55) des ersten Sperrkörpers (8-3) alternativ einrastbar sind durch Schwenken der Sperrklinke (28-2) vor oder zurück um ihre Drehachse (A) durch die Stellantriebsvorrichtung (30).

12. Wähleinrichtung nach einem der vorhergehenden Ansprüche,
**dadurch gekennzeichnet,**
daß der zweite Sperrkörper (28-2; 28-3) ein zweiarmiger Hebel ist, an dessen einem Arm die Stellantriebsvorrichtung (30) angreift und an dessen anderem Arm Sperrmittel (58, 60; 62) zum Eingriff mit dem ersten Sperrkörper (8-3; 8-4) vorgesehen sind.
